Europäisches Patentamt

European Patent Office

Office européen des brevets

(11) Publication number: **0 132 143**
A1

# (12) EUROPEAN PATENT APPLICATION

(21) Application number: **84304824.0**

(22) Date of filing: **16.07.84**

(51) Int. Cl.⁴: **G 01 D 5/26**
**G 01 B 9/02**

(30) Priority: **15.07.83 GB 8319240**

(43) Date of publication of application:
**23.01.85 Bulletin 85/4**

(84) Designated Contracting States:
**DE FR GB NL**

(71) Applicant: **BRITISH AEROSPACE PUBLIC LIMITED COMPANY**
**100 Pall Mall**
**London SW1Y 5HR(GB)**

(72) Inventor: **Malvern, Alan Richard**
**British Aerospace P.L.C. Downshire Way**
**Bracknell Berks, RG12 1QL(GB)**

(74) Representative: **Dowler, Edward Charles et al,**
**British Aerospace Public Limited Company Corporate**
**Patents Department Brooklands Road**
**Weybridge Surrey, KT13 OSJ(GB)**

(54) **Ring laser sensor.**

(57) The turntable of a gear forming machine tool has to be very accurately controlled as regards its position and/or rate of rotation with respect to the gear cutting or forming tool. It has been proposed to use a mechanical gyroscope to measure the position but this arrangement is subject to errors inherent to such a mechanical gyroscope. Herein, there is proposed the use of a laser gyroscope to measure the turntable position. Also, disclosed are interpolation techniques for achieveing the measurement resolution required for such a purpose. As well as a gear forming machine tool, the invention can be applied to other situations where the position of a rotatable member has to be accurately measured, for example in Engineering metrology machines.

Fig .1.

EP 0 132 143 A1

## MACHINE TOOL AND RING LASER GYROSCOPE THEREFOR.

This invention relates to apparatus having turntables which require to be rotated at precise angular rates to give precise positioning at any given instant.

Such apparatus includes gear forming machine tools such as gear hobbing and gear grinding machines; the present invention relates to such machine tools but not necessarily exclusively.

In such gear forming machine tools there have been many attempts at measuring the angular rate error and/or instantaneous angular positional error of the turntable with respect to the hobbing tool or the grinding wheel, but it has been found that these methods have had insufficient resolution to measure angular rates to an accuracy better than 0.01 arc second per sec. or to measure angular displacement better than 0.5 arc seconds, in a repeatable production process.

An existing technique of angular measurement uses Moire gratings. In addition to having insufficient resolution, this has disadvantage in that very accurate centring of the gratings is necessary and also the technique is sensitive to vibration. Moreover it is subject to periodic errors which result in a cyclic rather than the more preferable random gear noise signature.

It has been suggested that to improve existing techniques, the precession of a gyroscope could be used as the angular rate standard. Such an arrangement is described in Paper a-32 "Measurement of Rotational Fluctuation of the Work Table of Large Hobbing Machine" given by Hayashi, Mitsuk, and Yoshona at the International Symposium on Gearing and Power Transmissions held in Tokyo in 1981. In this paper is described an arrangement whereby the precession angle of a gyroscope rotor carried by the hobbing machine worktable when the table is subjected to rotation is, by means of a servo-mechanism, always tended to be reduced to zero, the bias of the servo-mechanism to achieve this at any instant being used to give a measure of the worktable angular rate, which when compared with a nominal rate, gives an error measurement. This error measurement can be used in a further servo-system to reduce this rate error. Naturally, the rate of worktable angular movement measured by the bias can be integrated with respect to time to provide an angular displacement measurement.

Such an arrangement has disadvantages in that it has many moving parts leading to unreliability and it appears to be particularly susceptible to vibration. Moreover, it is a rather indirect method of achieving angular measurement of displacement or rate.

Accordingly, it is an object of the present invention to overcome these disadvantages by utilising ring laser gyroscope apparatus and, in achieving such utilisation, to arrange that very high resolution of angular rates and/or positions is effected.

Ring laser gyroscopes comprise a gas filled cavity or ring disposed in a plane at right angles to that axis about which the gyroscope is designed to sense an angular rate, the cavity comprising three or more linear, and usually equal, limbs. Around the cavity propagate two beams of light travelling in opposite directions and directed about a closed loop by mirrors located at the cavity corners, and regeneratively amplified at frequencies for which path length equals an integral number of wavelengths. The output of a ring laser gyroscope may be provided by an arrangement which samples the frequency and phase of the two counter rotating beams such that they can be superimposed to create a fringe pattern of alternate interference. If the phase of the two beams remains fixed, the fringe pattern remains fixed in space, but if the phase of the two beams changes (a frequency difference between the two beams caused by angular movement about the sensitive axis) the fringe pattern will move. Detectors may be provided to count the number of fringe motions and provide pulses at a rate proportional thereto, thereby furnishing a digital readout from the original analogue. If the angular rate about the sensitive axis is constant then the fringe count and hence the pulse rate will be constant, but if the angular rate changes then the fringe count and hence the pulse rate will increase in direct proportion; by counting the fringe motions or pulses the total angular displacement about the sensitive axis is obtained. For example, if each count is of one arc second (depending on what is known as the scale factor) turning the gyroscope through $360^{\circ}$(one revolution) would produce an output of 1 296 000 pulses.

Thus according to one aspect of the present invention, a turntable of, for example a machine tool, requiring to have its angular rate and/or position measured is adapted to carry a ring laser gyroscope for rotation with it.

By this arrangement any periodic errors are obviated since a ring laser gyroscope inherently has only random noise and long term drift.

The sensitive axis of the ring laser gyroscope need not be coaxial with axis of rotation of the turntable; it can be mounted anywhere on the table, provided that the sensitive axis is substantially parallel to the axis of rotation.

For accurate measurement of angular rate and/or position, such as that necessary in gear forming machine tools, readout means must be provided to ensure that the output of the ring laser gyroscope is of high resolution.

Thus according to a further aspect of the invention a ring laser gyroscope suitable for use on the turntable of a machine tool for example a gear forming machine tool, includes interpolation means associated with its readout means whereby a high resolution of angular movement can be obtained.

These and other aspects of the invention are described with reference to the accompanying drawings in which:-

Figure 1 is a diagrammatic plan view of a gear forming machine tool,

Figure 2 is a diagrammatic view of a readout means adapted for high resolution,

Figure 3 is a diagrammatic arrangement providing a phase lock loop,

Figure 4 is a plot of voltage against time,

Figure 5 is a diagrammatic arrangement of a system using two of the arrangements as described with reference to Figure 3, and,

Figure 6 is a plot of the voltage output of each readout 4b against the same time scale.

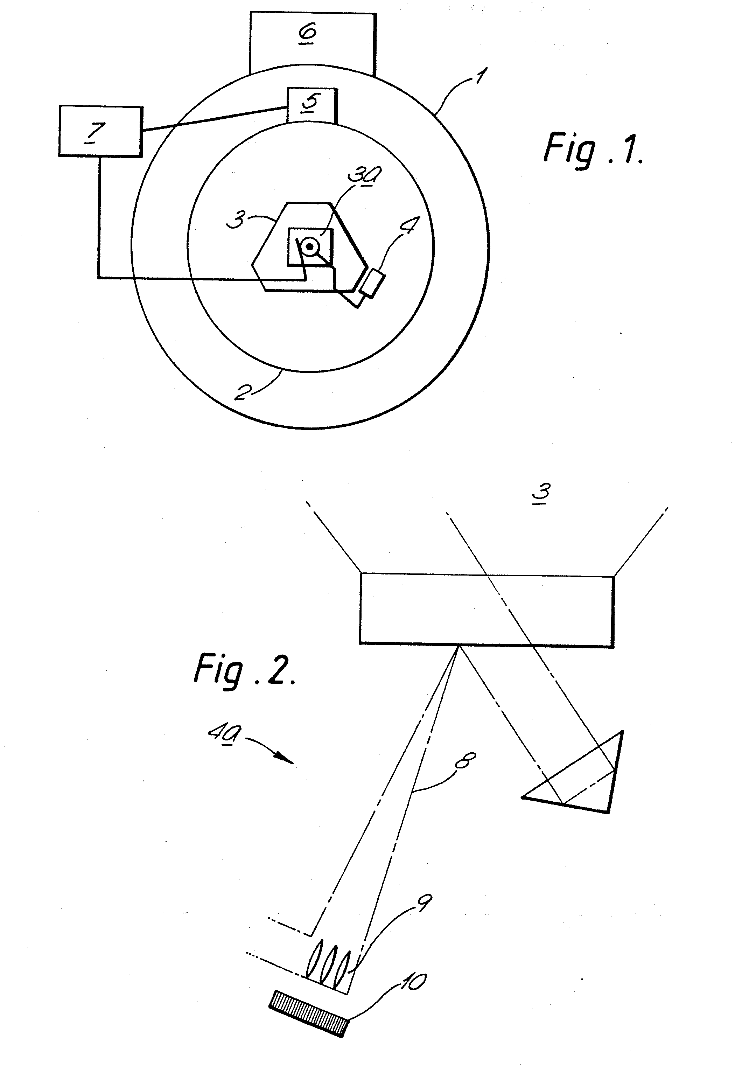

In Figure 1, a turntable of a gear forming machine tool carries a gear wheel 2 being formed, and also a ring laser gyroscope 3. Although in the diagram the rotational axis of the turntable and the sensitive axis of the ring laser gyroscope are shown co-axially arranged the gyroscope can be mounted anywhere on the turntable provided it is rigidly fixed and the sensitive axis of the gyroscope is parallel to the rotation axis of the turntable to within a few arc minutes.

The arrangement is suitable for use on that type of gear forming machine tool using a worm-like cutter called a hob 5 which cuts teeth in the metal blank 2. The turntable 1 rotates in one direction only having angular velocities in the range 1/5 RPM to 60 RPM. The lowest rotational rate corresponds to $4320^{\circ}$/Hour.

The arrangement is also suitable for use on that type of gear forming machine tool using a grinding process. In this the worktable may operate both clockwise and counter-clockwise; it has a rotational rate in the range $600^{\circ}$/Hour - $7200^{\circ}$/Hour.

The ring laser gyroscope includes output means 4 which is adapted to provide output signals representative of a very accurate measurement of the actual rotational rate and/or position of the turntable.

These signals are fed _via_ a slip-ring device 3a (shown only diagrammatically) to a control input of the cutting tool position drive means 7 wherein it is compared with a reference signal indicative of the desired rate/position of the turntable so as to derive an error signal for controlling the position of cutting tool 5 in a sense which reduces the error. Alternatively or in addition, the signals from the gyroscope could be applied to a drive unit (not shown) controlling the rotation of the turntable drive worm 6 to similarly control its motion.

To provide this very accurate measurement, the output means 4 is suitably adapted by the incorporation of interpolation techniques. These can be of two distinct types, namely those which look directly at the analogue output of an output means 4 that is to say the fringes to determine the actual fraction of the fringe by means of the readout optics and those which look at the digital output of an output means 4, that is to say the pulses, to determine the angular fraction between the pulses by linear interpolation of the time. This assumes that the angular rate of the turntable is constant between pulses.

Some examples of analogue interpolation techniques are now given.

One technique is described with reference to Figure 2. In this figure, a readout means 4(a) extracts two beams from the ring laser gyroscope and superimposes them in a known manner but with an angular deviation 8 to provide a linear fringe pattern 9 in space. By ensuring that the spacing of the fringes is sufficiently large, a multi-element photodiode array 10 may be utilised to provide interpolation since it will yield an output of fringe intensity plotted against position.

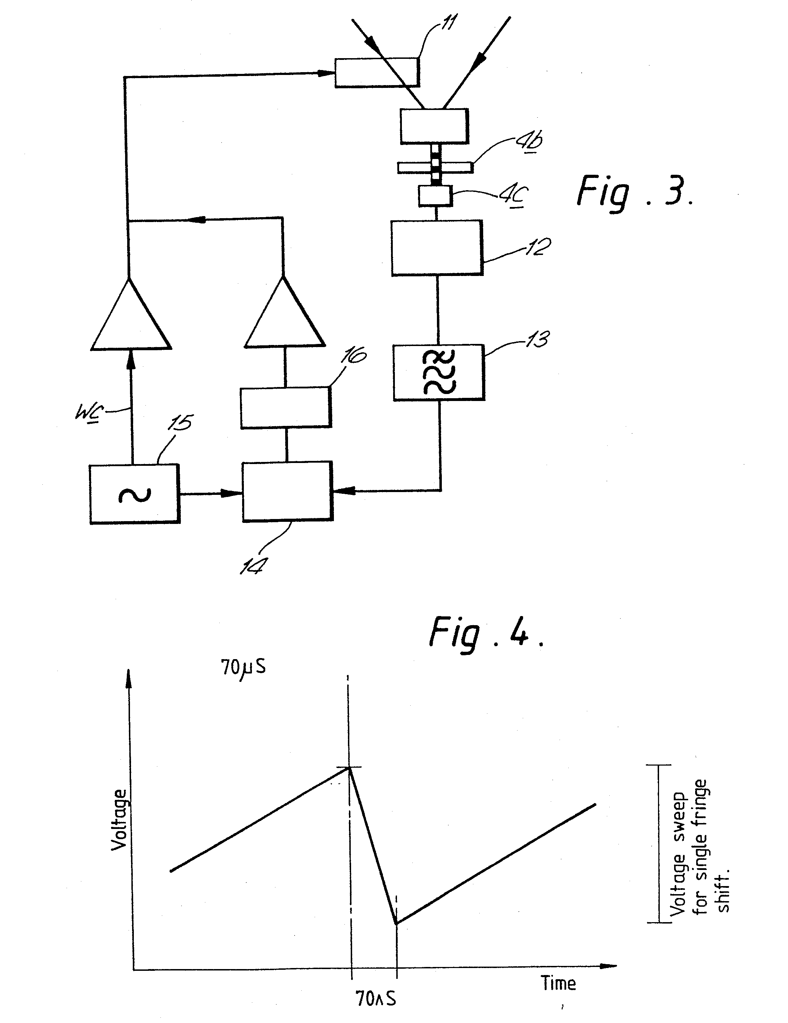

A further technique, described with reference to Figure 3, is to use phase lock loop tracking of a fringe feature, for example a maximum or minimum modulation. This can be achieved in two ways. In one, the two beams are combined in known fashion after one of them has passed through an electro-optic modulator 11 operable to change the optical path length for that beam when driven by a suitable generated voltage. This path length is not hysteretic and so there is a well defined relationship between the applied voltage and the path length change.

Thus a small amplitude path length modulation at frequency Wc is applied by AC generator 15 so that the combined laser beam will have this modulation impressed thereon. The combined beams are passed _via_ a polarising element, _eg_ a piece of Polaroid (trade name) material 4b to a photo detector 4c. The signal from the detector is amplified by pre-amplifier 12, filtered by a narrow band filter 13 of which the pass-band is centred on the frequency Wc and then applied to one input of a phase-sensitive detector 14, the other input of which receives a portion of the signal supplied by generator 15.

The intensity of the modulation applied by the modulator 11 depends upon the relative phase of the two beams. When they are exactly in or out of phase, the modulation is at a minimum and when the beams are at $90^o$ phase difference then the modulation is at a maximum. The phase sensitive detector will thus detect the fringe fractions. Its output is integrated at 16 to provide a voltage proportional to the optical phase difference between the two laser beams. By applying this large voltage to the modulator 11, it is possible to lock onto a particular fringe feature, for example a maximum or minimum of fringe intensity. Thus as the relative optical phase of the output beams changes due to an angular motion of the turntable, the required voltage to the modulator will change when locked. Therefore there will be a one-to-one relationship between the voltage output and the fringe fraction.

The servo-loop described is thus arranged to lock onto a particular part of the fringe and the high speed response of the electro-optical modulator 11 allows continuous tracking at the low angular rates of the turntable, with resetting for fringe movement.

This arrangement suffers from a limited dynamic range in that the servo-loop will only hold a small path length change of that feature of the fringe to which it is locked. To allow continuous rotation of the turntable requires a dynamic range of at least one whole fringe so that the electro-optical modulator can be quickly ramped from one fringe to the next without loss of angular information during path length change.

Figure 4, which shows voltage plotted against time at a constant angular rate of turntable movement, illustrates a desired arrangement where at each maximum voltage during a single fringe shift is rapidly ramped to a minimum voltage in a short period of time by means of a counter incremented so that readout of angular position is possible during continuous rotation.

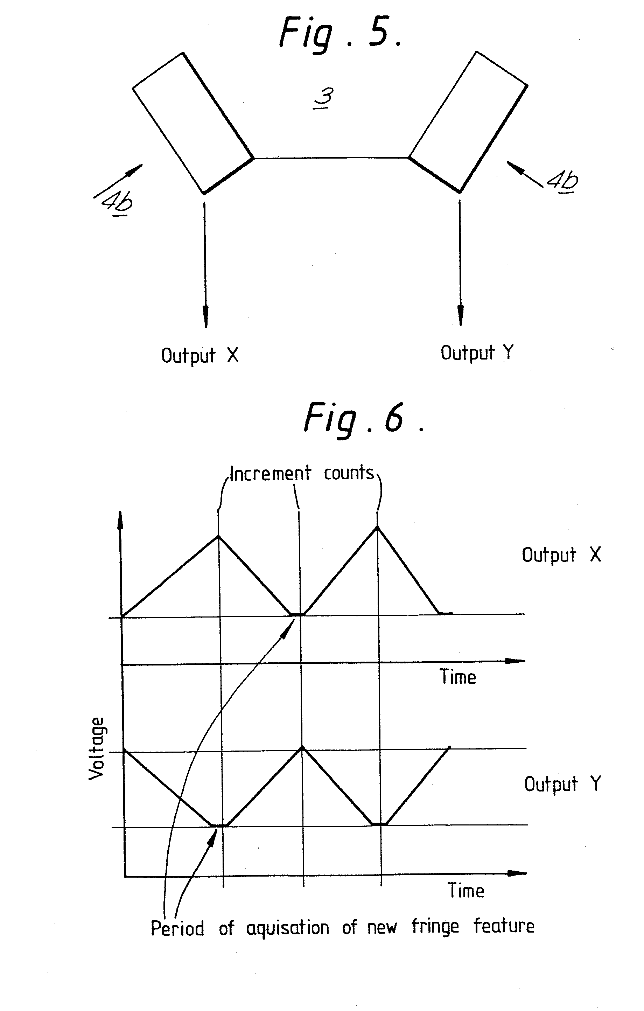

A disadvantage is that the very fast ramping by a large voltage implies a sizeable and expensive amplifying arrangement. Thus an alternative arrangement which may be cheaper and more compact is to use two separate readouts 4b with outputs X and Y as shown in Figure 5 and Figure 6. This allows that one readout to be tracking the fringe pattern under the phase lock loop system described with reference to Figure 3 whilst the other is recovering at a slower rate ie the same as tracking, than that possible with the single arrangement. Comparison is made with Figure 4.

The arrangement is such that with the loop associated with output X tracking, that associated with output Y is flying back and acquiring a new fringe feature on which to lock. When that loop associated with output X has tracked through the voltage range of a whole fringe, a switch, not shown, is triggered to effect both flyback of that loop and to initiate tracking by the loop associated with output X, and so on.

These techniques described with reference to Figures 2 to 6 describe what can be termed analogue techniques.

However, various digital techniques are possible, one is described briefly by way of example.

The formation of a fringe pattern in space is achieved as previously described and output pulses are provided with a time separation to a feature of the fringes, for example the zero crossings as detected. The time between successive pulses is measured. This will vary with rate of turntable movement. This time base is reset at each zero crossing or pulse.

The fraction between successive zero pulses ie the change in angle turned is then equal to the product of the change in time and the rate of turn as determined from the intervals between successive pulses - an arbitrary number of crossings (that is to say pulses) can be used.

Other factors affect the angular resolution possible by the described arrangements.

0132143

For example, since the ring laser gyroscope is an absolute rotation sensor relative to inertial space, it will sense an earth's rate component, depending upon the orientation of the sensitive axis of the gyroscope relative to the polar axis. This requires a correction to the gyroscope output in known manner.

Also the gyroscope requires to be calibrated shortly before use (to provide that pre-calibrated analytic parameters known as the scale factor and bias) by applying a constant rotation rate to the turntable in both directions and measuring the number of counts for an integral number of turns and applying this to the gyroscope output in known manner. The scale factor, which is defined as the spacing between fringes for each increment of angular movement of the gyroscope (that is to say pulses for each angle of turntable displacement) may be rate dependent and therefore, it is desirable to effect calibration at those rates at which operation takes place.

The presently described arrangements use an undithered gyroscope, fixedly mounted upon the turntable. If however, dithering means are fitted to unlock the two beams of the gyroscope at or near zero rotational rates, the bias can be determined when the turntable is at rest. The gyroscope will have a very well defined earth rate component, so by counting output pulses for an appropriate time and subtracting the known earth's rate component, the residue fixes the bias of the gyroscope. In this way, only a unidirectional motion is required to obtain both bias and scale factor.

In certain gear forming machine tool applications, there may be small amplitude oscillations which can give rise to periodic errors in the formed gear. These oscillations, in angular terms, may be below the angular increment of the ring laser gyroscope, which may be for example 1 arc second. Therefore interpolation means of the types described by way of example, giving higher angular resolution are desirable so that the instrumentation resolution is substantially higher than any error on the turntable/tool head combination which requires correction. At the lowest angular rate for gear grinding, of 600°/Hour, there will be an output frequency of 600Hz so that interpolation to 1/100 of a fringe will give a digital output of 60KHz. This rate needs to be high to give the servo sufficient information to allow quick correction of table/tool head position to the desired accuracy and resolution.

### CLAIMS

1. Apparatus comprising a support structure, a rotatable member supported by the support structure for rotation with respect thereto, drive means for rotating said rotatable member and a ring laser gyroscope mounted for rotation with said rotatable member with its sensitive axis substantially parallel to the axis of rotation of the rotatable member.

2. Apparatus according to claim 1, including coupling means for passing the output signals from said gyroscope to said drive means to provide automatic control of the position of said rotatable member.

3. Apparatus according to claim 1, including a further member which is supported by the support structure and which is movable with respect thereto and with respect to said rotatable member, further drive means for moving the further member, and coupling means for passing the output signals from said gyroscope to said further drive means to provide automatic control of the relative position of said further member and said rotatable member.

4. Apparatus according to claim 1, the apparatus comprising a machine tool, such as a gear forming machine tool, and said rotatable member comprising a workpiece support turntable.

5. Apparatus according to claim 1, wherein the output signal forming means of the gyroscope includes signal interpolation means adapted to improve the resolution of angular movement measurement by the gyroscope.

6. Apparatus according to claim 5, wherein the output signal forming means comprises beam superimposition means positioned to receive respective portions of the two oppositely directed laser beam components within the cavity of the gyroscope and to superimpose said beam portions to form a linear fringe pattern, and a multiple element photo-sensitive array arranged to receive said pattern and to provide electrical signals indicative of the fringes in the pattern.

7. Apparatus according to claim 5, wherein said output signal forming means comprises a phase-locked loop system including beam combining means for receiving respective portions of the two oppositely-directed laser beam components within the gyroscope cavity and for combining said portions, modulating means for modulating the apparent path length of one of said beam portions prior to its being combined with the other, photo-sensitive means for providing a signal indicative of the intensity of the combined beam portions, and phase sensitive detector means for receiving said intensity indicative signal and forming a bias signal for controlling said modulating means.

8. Apparatus according to claim 7, wherein said output signal forming means comprises a further phase-locked loop system similar to the first-mentioned such system, the two systems being arranged to be operable alternately to track an intensity feature of the combined beam portions.

9. Apparatus according to claim 1, wherein said ring laser gyroscope is fixed with respect to said rotatable member.

10. Apparatus according to claim 1, including dither means for supporting the gyroscope on said rotatable member, the dither means

0132143

being operable to generate a random oscillation of the gyroscope about its sensitive axis with respect to the rotatable member.

0132143

Fig .1.

Fig .2.

Fig . 3.

Fig . 4.

70μS

Voltage

70ʌS

Time

Voltage sweep for single fringe shift.

# Fig . 5.

_3_

Output X

Output Y

# Fig . 6 .

Increment counts

Output X

Time

Voltage

Output Y

Time

Period of aquisation of new fringe feature

**European Patent Office**

## EUROPEAN SEARCH REPORT

Application number

| | DOCUMENTS CONSIDERED TO BE RELEVANT | | EP 84304824.0 |
|---|---|---|---|

| Category | Citation of document with indication, where appropriate, of relevant passages | Relevant to claim | CLASSIFICATION OF THE APPLICATION (Int Cl 4) |
|---|---|---|---|
| X | FUNKSCHAU, 25-26, 1981 | 1,6,7,9 | G 01 D 5/26 |
| A | PETERMANN "Eine neue Meßmethode für Drehbewegungen" pages 82-84 | 2,4,5, 8,10 | G 01 B 9/02 |
| | * Page 84, column 2; fig. 2 * | | |
| | ---- | | |

| TECHNICAL FIELDS SEARCHED (Int. Cl.4) |
|---|
| G 01 B |
| G 01 C |
| G 01 D |

The present search report has been drawn up for all claims

| Place of search | Date of completion of the search | Examiner |
|---|---|---|
| VIENNA | 19-10-1984 | KUNZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82